# EUROPÄISCHE PATENTANMELDUNG

(11) **EP 2 333 000 A1**
(43) Veröffentlichungstag der Anmeldung: **15.06.2011**
(21) Anmeldenummer: 09015352.9
(22) Anmeldetag: 11.12.2009
(51) Int. Cl.: C08G 18/70, C08G 18/80, C08G 59/40, C08G 59/50, B01F 17/46

(54) **Polyethermodifizierte Epoxid-Amin-Addukte als Netz- und Dispergiermittel**

(71) Anmelder: BYK-Chemie GmbH, 46483 Wesel (DE)
(72) Erfinder: Orth, Ulrich, 46485 Wesel (DE); Holtkamp, Heribert, 46487 Wesel (DE); Omeis, Jürgen, 46286 Dorsten-Lembeck (DE)
(74) Vertreter: Leifert & Steffan

(57) **Zusammenfassung**

A) Polyepoxiden mit
B) mindestens einem primären Polyoxyalkylenamin
C) mindestens einem weiteren aliphatischen und/oder araliphatischen primären Amin
und
D) mindestens einem modifizierten Isocyanat.

## Beschreibung

Die Erfindung betrifft Umsetzungsprodukte von Epoxiden mit Aminen, polyethermodifizierten Aminen und Polyalkylenoxid-modifizierten und/oder Polyester-modifizierten und/oder Polyether-polyester-modifizierten Isocyanaten zu aminischen, kammartigen Polymeren sowie deren Salze als Netz- und Dispergiermittel für Pigmente und Füllstoffe sowie ein Verfahren zu ihrer Herstellung. Die Erfindung betrifft weiterhin die Verwendung dieser Umsetzungsprodukte als Netz- und Dispergiermittel für organische und anorganische Pigmente, sowie Füllstoffe in wässrigen, lösemittelbasierten und strahlenhärtbaren Systemen.

Die vorgenannten Umsetzungsprodukte sind insbesondere zur Herstellung von Pigmentkonzentraten sowie zur Stabilisierung von Feststoffen in Bindemitteln, Lacken, Kunststoffen und Kunststoffmischungen geeignet. Als Netz- und Dispergiermittel reduzieren sie die Viskosität solcher Systeme, verbessern die Lagerstabilität und die Fließeigenschaften und können die Farbstärke erhöhen.

Es sind hohe mechanische Kräfte erforderlich, um Feststoffe in flüssige Medien stabil einzubringen. Es ist daher üblich, Mittel einzusetzen, um diese Dispergierkräfte zu erniedrigen und damit sowohl den notwendigen Gesamtenergieeintrag in das System als auch die Dispergierzeit gering zu halten. Bei den bekannten Dispergiermitteln handelt es sich meist um oberflächenaktive Substanzen, die in kleiner Menge entweder direkt auf den Feststoff aufgebracht oder dem flüssigen Medium zugesetzt werden. Auch nach vollständiger Deflockulierung der Feststoffagglomerate kann es nach dem Dispergierprozess zu Reagglomerationen kommen, wodurch der Dispergieraufwand teilweise oder vollständig zunichte gemacht wird. Auf diese Weise können unerwünschte Effekte wie ein Viskositätsanstieg in den flüssigen Systemen, Farbtondrift oder ein Glanzverlust in Lacken und Beschichtungen zustande kommen.

Es ist eine Vielzahl von verschiedenen Substanzen bekannt, die heute Verwendung als Dispergiermittel für Pigment und Füllstoffe findet. Ein Überblick über vorhandene Patentliteratur findet sich in EP 0 318 999 A. Beispielsweise werden neben einfachen niedermolekularen Verbindungen wie Lecithin, Fettsäuren und deren Salze sowie Alkyphenolethoxylaten auch komplexe Strukturen als Netz- und Dispergiermittel eingesetzt.

Eine bekannte Gruppe solcher Dispergiermittel basiert auf Umsetzungsprodukten von Mono- oder Polyepoxiden mit Aminen, die eine Imidazolin-Gruppierung enthalten. Eine Übersicht über diese Gruppe von Dispergiermitteln findet sich unter anderem in den US-Patentschriften 5 128 393 und US 4 710 561. Eine weitere Gruppe von Dispergiermitteln wird gebildet aus Polyepoxid / Amin-Mischungen und deren Salzen. Aus den Druckschriften DE 36 23 296 A und DE 36 23 297 A ist die Verwendung solcher Mischungen als Dispergiermittel für Pigmente vornehmlich in organischen Medien bekannt, wobei es sich bei den Polyepoxiden um Novolacke handelt und als Amine aliphatische, aromatische und/oder heterocyclische Amine mit niedrigem Molekulargewicht eingesetzt werden.

In jüngster Zeit hat es weitere Entwicklungen auf dem Gebiet der Polyepoxid / Amin-Dispergiermittel gegeben. In der EP 747 413 A werden als Emulgatoren Umsetzungsprodukte aus aliphatischen Polyolen mit Epoxiden mit mindestens zwei Epoxidgruppen pro Molekül beschrieben. Diese Verbindungen tragen demnach keine versalzbaren Stickstoffatome und zeigen daher nur geringe Affinität zu Füllstoffen und Pigmenten. Demgegenüber beschreibt die DE 103 26 147 A1 als Netz- und Dispergiermittel geeignete Additionsverbindungen von mono- oder polyfunktionellen, aromatischen Epoxiden mit Polyoxyalkylenmonoaminen. Diese speziellen Amine weisen mindestens vier Ether-Sauerstoffe pro Molekül auf. Eine weitere Anwendung der speziellen polyethersubstituierten Amine wird in der WO 2005/113677 A1 offenbart. Hier dienen die Amine als Emulgatoren zur Herstellung einer großen Bandbreite von Tinten mit hohem Pigmentanteil.

Allen vorgenannten Dispergiermitteln ist gemeinsam, dass sie jeweils für ein eng begrenztes Einsatzgebiet entwickelt wurden und daher speziell auf die Pigment-Bindemittel-Mischung abgestellt sind. In Systemen mit stark unterschiedlicher Polarität sind sie jedoch nur bedingt einsetzbar.

Ein weiterer Nachteil der Dispergiermittel, die ausschließlich auf polyethersubstituierten Aminen basieren, besteht in der begrenzten Verfügbarkeit der Amine. Derzeit werden beispielsweise nur ca. fünf verschiedene Amine angeboten. Polyether-Polyestermodifizierte primäre Amine sind hingegen gar nicht verfügbar.

Gerade im Hinblick auf großindustrielle Anwendungen stellt die geringe Bandbreite und Verfügbarkeit der bisher bekannten Netz- und Dispergiermittel ein Hindernis dar, weil im Zuge der rationalisierten Prozessabläufe bevorzugt modulare Komponenten eingesetzt werden. Diese modularen Komponenten sollen im Sinne eines Baukastensystems gut mit den anderen Komponenten wie Bindemitteln, Hilfsstoffen und Lösemitteln verträglich sein.

Es ist daher Aufgabe der vorliegenden Erfindung ein Netz- und Dispergiermittel bereitzustellen, das eine gute Verträglichkeit mit gängigen Bindemittel- und Lösemittelsystemen aufweist. Gleichzeitig soll eine leichte Verfügbarkeit des Netz- und Dispergiermittels sowie eine gute Langzeit- und Lagerstabilität gegeben sein. Die Netz- und Dispergiermittel sollen die Viskosität verringern, ohne den Glanz und den Haze einer Lackierung, die das Netz- und Dispergiermittel enthält, negativ zu beeinflussen. Daneben soll ein Verfahren zur Herstellung solcher Netz- und Dispergiermittel angegeben werden.

Die Aufgabe wird erfindungsgemäß gelöst durch eine als Netz- und Dispergiermittel geeignete Additionsverbindung, erhältlich aus der Umsetzung von

### A) Polyepoxiden mit

### B) mindestens einem primären Polyoxyalkylenamin der allgemeinen Formel (l)

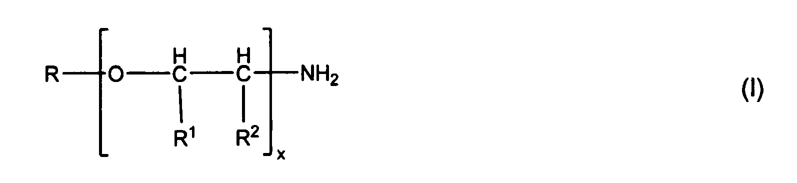

wobei R = C₁-C₂₄-Alkyl, C5-C₁₂-Cycloalkyl, C₆-C₁₀-Aryl, C₆-C₁₈-Aralkyl, R¹ und R² unabhängig voneinander gleich oder verschieden sein können und H, C₁-C₂₄-Alkyl, Aryl, und/oder -CH₂-O-CₙH₂ₙ₊₁ bedeuten, x blockweise oder statistisch angeordnet sein kann und vorzugsweise 10 bis 100, bevorzugt 20 bis 70, besonders bevorzugt 35 bis 50 ist,

### C) mindestens einem weiteren aliphatischen und/oder araliphatischen primären Amin der allgemeinen Formel (11)

H₂N-R⁶-Z (II)

wobei R⁶ = Alkyl, Cycloalkyl, Aryl und Aralkyl bedeutet und Z eine weitere funktionelle Gruppe ausgewählt aus -OH, tertiäres Amin oder ein heterozyklischer Rest mit einem 5 oder 6-gliedrigen Ring, der als Heteroatome bevorzugt N und/oder O enthält, wie z.B. N-(3-Aminopropyl)-imidazol oder N-(2-Aminoethyl)-morpholin sein kann,

### D) mindestens einem modifizierten Isocyanat der allgemeinen Formel (IIIa) und/oder (IIIb)

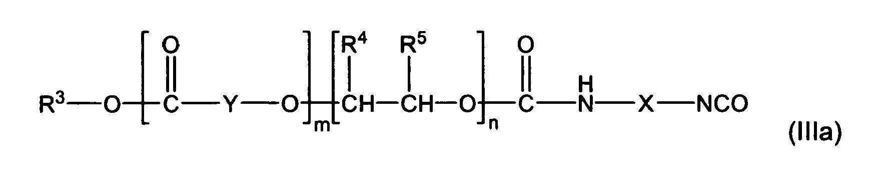

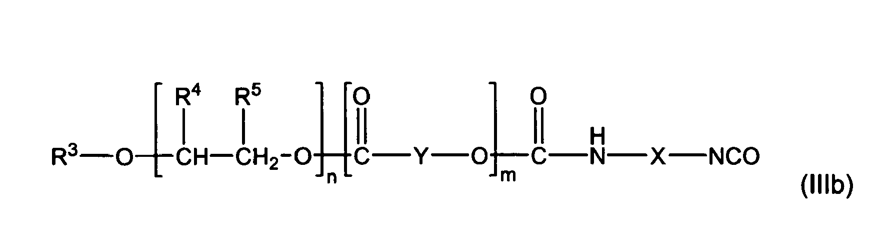

wobei R³ - Alkyl, Cycloalkyl, Aryl und/oder Aralkyl ist, R⁴ und R⁵ unabhängig voneinander H, Alkyl und/oder Aryl sind, X = Alkylen, Cycloalkylen und/oder Aralkylen, Y = Alkylen und/oder Cycloalkylen und n und m unabhängig voneinander gleich 0 bis 100, vorzugsweise 1 bis 100, besonders bevorzugt 2 bis 100 sind, wobei die Summe n+m ≥ 2 ist, unter Bildung eines Urethans.

Bevorzugt weisen die gebildeten Urethane ein kalkuliertes zahlenmittleres Molekulargewicht von 1800 bis 100000 g/mol auf. Besonders bevorzugt sind Urethane mit einem kalkulierten zahlenmittleren Molekulargewicht von 2000 bis 70000 g/mol, ganz besonders bevorzugt 10000 bis 60000 g/mol auf.

Durch den Einsatz der Polyether-, Polyester- und/oder Polyether-Polyester-modifizierten Isocyanate weisen die erfindungsgemäßen Additionsverbindungen eine breite Verfügbarkeit auf. Die zusätzlich in den erfindungsgemäßen Verbindungen vorhandene Urethanbindung ermöglicht sowohl eine breite Verträglichkeit mit gängigen Bindemittel-Lösemittelsystemen als auch eine vorteilhafte Langzeit- und Lagerstabilität aufgrund ihrer chemischen Inertheit. Es ist besonders überraschend, dass die Netz- und Dispergiermittel die Viskosität verringern können, ohne den Glanz und den Haze einer Lackierung, die das Netz- und Dispergiermittel enthält, negativ zu beeinflussen.

Als Komponente A können aromatenhaltige und/oder aliphatische Polyepoxide eingesetzt werden. Die Polyepoxide können zwei oder mehr Epoxidgruppen pro Molekül enthalten und weisen mindestens sechs Kohlenstoffatome auf. Es können auch Gemische von verschiedenen Polyepoxiden eingesetzt werden. Typische Beispiele aus der Gruppe der aromatenhaltigen Polyepoxide sind Umsetzungsprodukte von Diphenylolpropan (Bisphenol A) mit Epichlorhydrin und deren höhere Homologe, die beispielsweise unter den Markenbezeichnungen D.E.R. oder Epikote von der DOW Chemical Company bzw. von Resolution Performance Products angeboten werden. Beispiele für aliphatische Polyepoxide sind z.B. 1,6-Hexandiglycidylether und 1,4-Butandiglycidylether. Die aliphatischen Polyepoxide können auch zusätzlich Sauerstoff in der Kette enthalten, wie z. B. Polypropylenglykoldiglycidylether und Polytetrahydrofurandiglycidylether. Diese aliphatischen Polyepoxide sind z.B. unter der Handelsbezeichnung Grilonit^{®} der Fa. Ems-Chemie erhältlich.

Bei den Polyetheraminen der Komponente B handelt es sich bevorzugt um Methanol-gestartete Polyethylenglykol-Polypropylenglykole mit terminaler primärer Aminogruppe, die auf Ethylenoxid und Propylenoxid basieren und unter der Handelsbezeichnung Jeffamin^{®} der Fa. Huntsman kommerziell erhältlich sind. Es kommen aber auch Polyetheramine zum Einsatz, deren Polyether-Teil auf anderen Epoxiden basiert wie z.B. Butylenoxid, 1,2-Epoxihexan, 2-Ethylhexylglycidylether oder Styroloxid. Dabei kann die Verteilung der Epoxideinheiten bei Verwendung verschiedener Epoxide blockweise oder statistisch erfolgen. Durch die Verwendung solcher Epoxide zur Herstellung der Polyether lässt sich die Verträglichkeit für verschiedene Bindemittel oder Lösemittel beliebig anpassen.

Die aliphatischen und/oder araliphatischen Amine der Komponente C weisen bevorzugt 3 bis 28 Kohlenstoffatome auf. Beispiele hierfür sind Aminohexan, Stearylamin, Oleylamin sowie Benzylamin oder Cyclohexylamin. Als zusätzliche funktionelle Gruppen sind Hydroxylgruppen oder tertiäre Aminogruppen besonders bevorzugt. Beispiele für Amine mit funktionellen Gruppen sind z.B. Ethanolamin, Butanolamin, 2-Amino-2-methyl-1-propanol oder auch Amine mit mehr als nur einer zusätzlichen funktionellen Gruppe wie z.B. 2-Amino-2-Ethyl-1,3-propandiol oder 2-Amino-2-hydroxymethyl-1,3-propandiol. Insbesondere bevorzugt sind beispielsweise Ethanolamin, Butanolamin und/oder Dimethylaminopropylamin. Beispiele für Amine mit heterocyclischen Resten sind N-(3-Aminopropyl)-imidazol oder N-(2-Aminoethyl)-morpholin.

Erfindungsgemäß können die Komponenten A und (B + C) miteinander in einem stöchiometrischen Überschuss der Komponente A unter Bildung von epoxidterminierten Polymeren umgesetzt werden. Gleichermaßen erfindungsgemäß können die Komponenten A und (B + C) miteinander in einem stöchiometrischen Überschuss der Komponenten (B + C) unter Bildung von aminterminierten Polymeren umgesetzt werden. Vorzugsweise wird die Komponente A zu der Summe der Komponenten B und C in einem molaren Verhältnis von 33 : 32 bis 32 : 33 eingesetzt. Bevorzugt ist ein molares Verhältnis von 21 : 20 bis 20 : 21, besonders bevorzugt 11 : 10 bis 10 : 11.

Die Komponenten A, B und C werden vorzugsweise in einem molaren Verhältnis eingesetzt, in dem A, B und C vollständig umgesetzt werden.

Vorzugsweise ist das molare Verhältnis von Komponente B zu Komponente C 2 : 30 bis 30 : 2. Bevorzugt ist ein molares Verhältnis von 3 : 1 bis 1 : 3, besonders bevorzugt 3 : 1 bis 3 : 2.

In einer weiteren bevorzugten Ausführungsform der vorliegenden Erfindung wird Komponente D in einer Menge eingesetzt, das 5-100%, bevorzugt 20-100% und besonders bevorzugt 40-100% der durch die Addition der Komponenten A und (B + C) erzeugten OH-Gruppen unter Urethanbildung umgesetzt werden.

In einer bevorzugten Ausführungsform der vorliegenden Erfindung werden als Komponente A Diepoxide der allgemeinen Formel (IV) 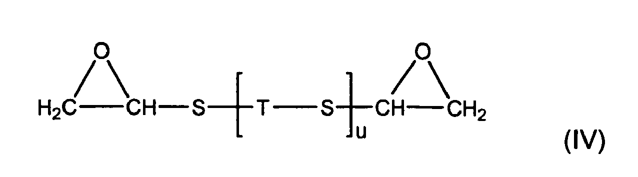 mit S = -CH₂-O- oder -CH₂-, T = Alkylen, Cycloalkylen, Arylen oder Aralkylen und u = 1-8 eingesetzt.

Besonders bevorzugt werden als Komponente A aliphatische Diepoxidverbindungen mit durchschnittlich zwei Epoxyfunktionen pro Molekül und insbesondere bevorzugt Diglycidylether von Diolen eingesetzt.

Die aus den Komponenten A, B, C und D erhaltenen Additionsverbindungen stellen hochwertige und breit verträgliche Netz- und Dispergiermittel dar. Sie können in der Form, in der sie durch die zweistufige Reaktion erhalten werden, eingesetzt werden. Um ihre Eigenschaften im Einzelfall an spezifische Anforderungen anzupassen, ist es in manchen Fällen jedoch wünschenswert, sie weiter zu modifizieren. Im Folgenden werden geeignete Modifizierungen beschrieben, die auf eine Reaktion mit den in den Additionsverbindungen vorhandenen Hydroxyl- und/oder Aminogruppen basieren. Diese können bei der Modifikation vollständig oder teilweise umgesetzt werden.

Die folgenden Modifizierungsreaktionen können bei Bedarf kombiniert werden, so dass mehrfach modifizierte Additionsverbindungen erhalten werden. Sollten mehrere Modifizierungsreaktionen aufeinander folgend durchgeführt werden, ist darauf zu achten, genügend reaktive Gruppen für eine oder mehrere nachfolgende Umsetzungen im Molekül zu erhalten. Die genannten Modifizierungen sind vorteilhafte Ausgestaltungen der vorliegenden Erfindung und können realisiert werden durch:
1. Umsetzung der terminalen Aminogruppen mit Isocyanaten, Lactonen, cyclischen Carbonaten oder (Meth)acrylaten,
2. Umsetzung der terminalen Epoxidgruppen mit sekundären Aminen oder gesättigten oder ungesättigten Carbonsäuren,
3. Umsetzung der verbliebenen Hydroxylfunktion mit Hydroxycarbonsäuren und/oder cyclischen Lactonen,
4. Umsetzung der verbliebenen Hydroxylfunktion mit ungesättigten cyclischen Anhydriden unter Erhalt der Doppelbindung zur Strählenhärtung
5. Umsetzung der verbliebenen Hydroxylfunktion mit (Meth)acrylsäure und/oder (Meth)acrylsäureestern unter Erhalt der Doppelbindung zur Strählenhärtung
6. Umsetzung der verbliebenen Hydroxylfunktion mit anderen als den unter C aufgeführten Isocyanaten,
7. Umsetzung der verbliebenen Hydroxylfunktion mit Phosphorsäure oder Polyphosphorsäure und/oder sauren Phosphorsäureestern und/oder Carbonsäuren, und
8. Alkylierung oder Oxidation der Aminogruppe unter Ausbildung von quaternären Ammoniumsalzen oder Stickstoffoxiden.

Mit der Bezeichnung "(Meth)aryl-" sind sowohl Acryl- als auch Methacryl-Verbindungen gemeint. Analog sind mit der Bezeichnung "(Meth)acrylat-" sowohl Acrylat- als auch Methacrylat-Verbindungen gemeint.

Sollen (Meth)arcyl- bzw. (Meth)acrylat-Verbindungen eingesetzt werden, so sind Arcylat-Verbindungen bevorzugt.

Die gegebenenfalls in den erfindungsgemäßen Additionsverbindungen verbliebenen freien Epoxidgruppen können wie unter 2.) angeführt mit Carbonsäuren verestert werden. Bevorzugt ist die Veresterung mit (Meth)acrylsäure unter Erhalt der Doppelbindung zur Strahlenhärtung.
Die gegebenenfalls in den erfindungsgemäßen Additionsverbindungen verbliebenen freien Hydroxylgruppen können, wie unter 3., 4. und 5.) angeführt, verestert werden. Die Veresterung erfolgt in einer dem Fachmann bekannten Weise. Wenn in dem erfindungsgemäßen Additionsprodukt zusätzlich freie Aminogruppen vorhanden sind, empfiehlt es sich, diese vor der Veresterung zu versalzen, um eine befriedigende Reaktionsgeschwindigkeit zu erzielen. Bei dieser Umesterung bleiben endständige OH-Gruppen erhalten, wodurch sich die resultierenden Produkte durch eine besonders breite Verträglichkeit in vielen Lacksystemen auszeichnen.

Die bei der erfindungsgemäßen Addition entstandenen Verbindungen mit gegebenenfalls verbliebenen Hydroxylgruppen können weiterhin gemäß 6.) mit Isocyanaten umgesetzt werden. Die Urethanbildung wird in dem Fachmann bekannter Art durchgeführt. Die Umwandlung der Hydroxylgruppe in eine Urethangruppe wird bevorzugt vorgenommen, wenn Hydroxylgruppen im Lacksystem stören. Zudem kann sich die weitere Urethanbildung günstig auf die entschäumende Wirkung der Netz- und Dispergiermittel auswirken. Die Unterdrückung der Schaumneigung stellt vor allem bei Anreibungen in wässrigen Formulierungen eine wichtige zusätzliche Eigenschaft der Netz- und Dispergiermittel dar.

Die unter 8.) beschriebene Modifikation der gegebenenfalls verbliebenen Aminogruppen erfolgt in dem Fachmann bekannter Weise. Beispielsweise kann mit Alkyl- oder Aralkylhalogeniden, mit Halogencarbonsäureestern oder Epoxiden eine Quarternisierung des Aminostickstoffatoms erreicht werden. Eine solche Quarternisierung ist beispielsweise dann bevorzugt, wenn Aminogruppen in dem Bindemittelsystem stören, in welches die Pigmentpaste eingearbeitet wird.

Die Umsetzung der Epoxidfunktion der Komponente A mit den Aminogruppen der Komponenten B und C unter Bildung der β-Hydroxyaminofunktion kann in einem Lösungsmittelsystem, bevorzugt aber in Substanz nach den dem Fachmann bekannten Verfahren durchgeführt werden. Die zu wählende Reaktionstemperatur hängt dabei von der Reaktivität der Edukte ab. Viele Epoxide reagieren mit Aminen bereits bei Raumtemperatur. Hingegen können für weniger reaktive Epoxide Reaktionstemperaturen bis 160°C nötig sein. Besonders geeignete Reaktionstemperaturen für die Umsetzung von Epoxiden mit Aminen liegen bei 50-120°C. Gegebenenfalls können dem Fachmann bekannte Katalysatoren verwendet werden, um die Umsetzung des Epoxids mit dem Amin zu beschleunigen.

Komponente D wird bevorzugt hergestellt nach den Verfahren, wie sie in der DE 199 19 482 A1 beschrieben sind. Dazu werden Monohydroxy-Verbindungen mit einem Überschuss an Diisocyanat, bevorzugt Toluylendiisocyanat, umgesetzt und der nicht umgesetzte Teil des Diisocyanats wird aus dem Reaktionsgemisch entfernt.

Die Aufgabe der vorliegenden Erfindung wird gleichermaßen gelöst durch ein Verfahren zur Herstellung einer als Netz- und Dispergiermittel geeigneten Additionsverbindung durch Umsetzung von

### A) Polyepoxiden mit

### B) mindestens einem primären Polyoxyalkylenamin der allgemeinen Formel (1)

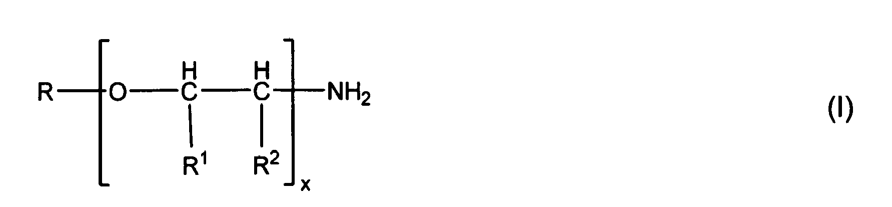

wobei R = C₁-C₂₄-Alkyl, C₅-C₁₂-Cycloalky), C₆-C₁₀-Aryl, C₆-C₁₈-Aralkyl, R¹ und R² unabhängig voneinander gleich oder verschieden sein können und H, C₁-C₂₄-Alkyl, Aryl, und/oder -CH₂-O-CₙH₂ₙ₊₁ bedeuten, x blockweise oder statistisch angeordnet sein kann und vorzugsweise 10 bis 100, bevorzugt 20 bis 70, besonders bevorzugt 35 bis 50 ist,

### C) mindestens einem weiteren aliphatischen und/oder araliphatischen primären Amin der allgemeinen Formel (ll)

H₂N-R⁶-Z (II)

wobei R⁶ = Alkyl, Cycloalkyl, Aryl und Aralkyl bedeutet und Z eine weitere funktionelle Gruppe ausgewählt aus -OH, tertiäres Amin oder ein heterozyklischer Rest mit einem 5 oder 6- gliedrigen Ring, der als Heteroatome bevorzugt N und/oder O enthält, wie z.B. N-(3-Aminopropyl)-imidazol oder oder N-(2-Aminoethyl)-morpholin sein kann,

### D) mindestens einem modifizierten Isocyanat der allgemeinen Formel (llla) und/oder (lllb)

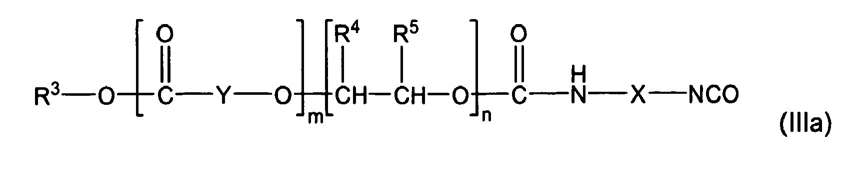

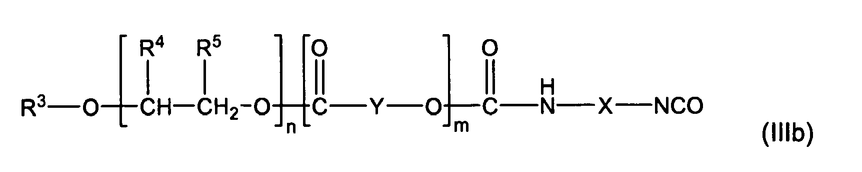

wobei R³ = Alkyl, Cycloalkyl, Aryl und/oder Aralkyl ist, R⁴ und R⁵ unabhängig voneinander H, Alkyl und/oder Aryl sind, X = Alkylen, Cycloalkylen und/oder Aralkylen, Y = Alkylen und/oder Cycloalkylen und n und m unabhängig voneinander gleich 0 bis 100, vorzugsweise 1 bis 100, besonders bevorzugt 2 bis 100 sind, wobei die Summe n+m ≥ 2 ist, unter Bildung eines Urethans.

In einer bevorzugten Ausführungsform des erfindungsgemäßen Verfahrens werden als Komponente A) Diepoxide der allgemeinen Formel IV 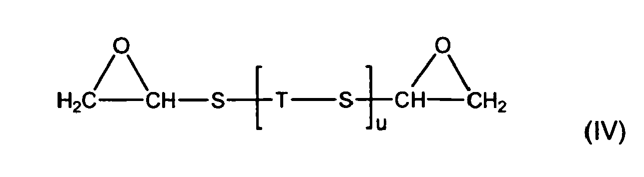 mit S = -CH₂-O- oder -CH₂-, T = Alkyl, Cycloalkyl, Aryl oder Aralkyl und u = 1-8 eingesetzt. Besonders bevorzugt sind aliphatische Diepoxide, da diese eine geringe Eigenviskosität der Produkte garantieren.

Im Hinblick auf den Einsatz der Komponente D wird die eingesetzte Menge dieser Komponente bevorzugt so gewählt, dass in der Additionsreaktion 5-100%, bevorzugt 20-100% und besonders bevorzugt 40-100%, der durch die Addition der Komponenten A und (B + C) erzeugten OH-Gruppen unter Urethanbildung umgesetzt werden.

Auf diese Weise wird eine besonders gute Verträglichkeit der Additionsverbindung mit Bindemitteln gerade in wässrigen Systemen erzielt.

Die erfindungsgemäßen Additionsverbindungen werden als Netz- und/oder Dispergiermittel für organische und/oder anorganische Pigmente oder Füllstoffe verwendet. Die Dispergiermittel können alleine oder zusammen mit Bindemitteln eingesetzt werden. Besonders bevorzugt finden die erfindungsgemäßen Netz- und Dispergiermittel in wässrigen und/oder lösemittelhaltigen Lacken zur Stabilisierung und Dispergierung von Pigmenten und Füllstoffen ihre Anwendung.

In einer weiteren bevorzugten Ausführungsform werden die erfindungsgemäßen Additionsverbindungen als Netz- und/oder Dispergiermittel für organische und/oder anorganische Pigmente oder Füllstoffe in strahlenhärtbaren Systemen verwendet.

Neben dem Einsatz als Netz- und Dispergiermittel in wässrigen und/oder lösemittelhaltigen und/oder strahlenhärtbaren Systemen, ist es ebenfalls möglich, pulver- oder faserförmige Feststoffe mit den erfindungsgemäßen Additionsverbindungen zu beschichten. Derartige Beschichtungen von organischen und anorganischen Feststoffen werden in bekannter Art und Weise durchgeführt, beispielsweise sind in der EP 0 270 126 A solche Verfahren beschrieben. Speziell bei Pigmenten kann eine Beschichtung der Pigmentoberfläche während oder nach der Synthese der Pigmente erfolgen, beispielsweise durch Zusatz der erfindungsgemäßen Additionsverbindungen zur Pigmentsuspension. Auf diese Weise vorbehandelte Pigmente zeigen eine leichte Einarbeitbarkeit in das Bindemittelsystem, ein verbessertes Viskositäts- und Flockulationsverhalten sowie einen guten Glanz gegenüber nicht behandelten Pigmenten. Des weiteren eignen sich die erfindungsgemäßen Additionsverbindungen zur Dispergierung von z.B. Effektpigmenten in Nagellacken.

Die erfindungsgemäßen Dispergiermittel werden bevorzugt in einer Menge von 0,5-60 Gew.-% bezogen auf den zu dispergierenden Feststoff eingesetzt. Bei speziellen Feststoffen können zur Dispergierung aber auch wesentlich höhere Mengen an Dispergiermittel notwendig sein.

Die eingesetzte Menge an Dispergiermittel ist im Wesentlichen abhängig von Größe und Art der Oberfläche des zu dispergierenden Feststoffs. Beispielsweise benötigt Ruß wesentlich größere Mengen an Dispergiermittel als Titandioxid. In der EP 0 270 126 A finden sich Beispiele für Pigmente und Füllstoffe. Weitere Beispiele basieren auf Neuentwicklungen insbesondere im Bereich der organischen Pigmente wie in der Klasse der Diketo-pyrrolo-pyrrole. Auch magnetische Pigmente auf Basis Reineisen oder Mischoxiden können mit Hilfe der erfindungsgemäßen Dispergiermittel in Dispersionen eingebracht werden. Des weiteren lassen sich auch mineralische Füllstoffe wie Calciumcarbonat und Calciumoxid oder Flammschutzmittel wie Aluminium- oder Magnesiumhydroxid dispergieren. Zudem werden auch Mattierungsmittel wie Kieselsäuren dispergiert und stabilisiert.

Die Erfindung wird durch die nachfolgenden Beispiele zusätzlich erläutert ohne durch diese beschränkt zu sein. Wenn nicht anders angegeben, handelt es sich bei der Angabe von Teilen um Gewichtsteile, bei der Angabe von Prozenten um Gewichtsprozente.

### Beispiele

### Beispiel 1 (erfindungsgemäß)

In einem 250 ml Vierhalskolben mit KPG-Rührer, Stickstoffleitung und Intensivkühler wurden 5,93g (0,003mol) Jeffamin M 2070 und 2,22g (0,021 mol) Benzylamin vorgelegt und unter Rühren auf 100°C erwärmt. Innerhalb von 3 Stunden wurden 6,22g (0,022mol) Grilonit RV 1812 zugetropft. Nach insgesamt 5 Stunden Reaktionszeit wurden 63,00g (0,03mol) TDI-M2000 Isocyanat-Addukt zugetropft. Nach weiteren 3 Stunden Reaktionszeit bei 100°C wurde das Reaktionsprodukt mit 115,13 g VE-Wasser verdünnt. Das hergestellte Produkt ist eine gelbliche, klare Lösung mit 40 % Festkörper.

Die weiteren Beispiele wurden mit den in der unten angeführten Tabelle gezeigten Edukten nach der oben genannten Vorschrift durchgeführt.

| **Bsp.** | **Epoxide (A)** | **Polyether-Amin (B)** | **Amin (C)** | **Molverhältnis A : (B+C)** | **lsocyanat-Addukt** | **Umgesetzte OH-Gruppen** |
|---|---|---|---|---|---|---|
| 2 | Grilonit RV 1812 | Jeffamin M 2070 | Benzylamin | 15 : (2+14) | TDI-M2000 | 75 % |
| 3 | Grilonit RV 1812 | Jeffamin M 2070 | Benzylamin | 15 : (8+8) | TDI-MP41-2000 | 65 % |
| 4 | Grilonit RV 1812 | Jeffamin M 2070 | Benzylamin | 20: (5+16) | TDI-B11/120 | 50% |
| 5 | Grilonit RV 1806 | Jeffamin M 2005 | Cyclohexylamin | 3 : (2+2) | TDI-B11/120 | 35 % |
| 6 | Grilonit RV 1812 | Jeffamin M 2005 | Benzylamin | 15: (8+8) | TDI-M2000 | 50% |
| 7 | Grilonit F704 | Jeffamin M 2005 | Benzylamin | 12 : (4+7) | TDI-MP41-2000 | 50% |

| | | | | | | |
|---|---|---|---|---|---|---|
| TDI: Toluylendiisocyanat (Isomerengemisch) M2000: Methoxypolyethylenglykol (Mol.-Gew. 2000) MP41-2000: Methoxypolyethylen-polypropylenglykol (Mol.-Gew. 2000, EO/PO=4/1) Grilonit RV 1806:1,4-Butanediglycidylether Grilonit RV 1812: 1,6-Hexanediglycidylether Grilonit F704: Polypropyleneglycoldiglycidylether (ca. 7 PO) B11/120: Butoxypolyethylenglykol-polypropylenglykol (Mol.-Gew.: ca. 2000; EO/PO: 1:1) Jeffamin M2070: Methoxypolyethylenglykol-polypropylenglykolamin, (Mol.-Gew.: ca. 2000; EO/PO: 32:10) Jeffamin M2005: Methoxypolyethylenglykol-polypropylenglykolamin, (Mol.-Gew.: ca. 2000; EO/PO: 6:29) | | | | | | |

### Anwendungstechnische Beurteilung

Zur Prüfung der Wirksamkeit der erfindungsgemäßen Dispergiermittel wurden bindemittelfreie Pigmentpasten hergestellt, die in ein Bindemittel (Johncryl 8052) eingearbeitet wurden. Dabei wurde die Viskosität beurteilt. Nach Applikation und Aushärtung der fertigen Pigmentlacke wurden dann die Aufzüge visuell beurteilt und Glanz- und Glanzschleier- (Haze)messungen vorgenommen. Die Dispergierung der Komponenten der Formulierung erfolgt über 40 - 60 min. bei 40°C und 10.000 U/min mit Hilfe eines Dispermaten CV der Fa. VMA-Getzmann GmbH
Byk 017: Entschäumer der Fa. Byk-Chemie GmbH
Johncryl 8052: Acrylat-Dispersion der Fa. Johnson Polymers
Irgalithrot FBN: Naphtol-AS Pigment der Fa. Ciba
Printex 35: Schwarzpigment (Furnace Ruß) der Fa. Degussa
Sunfast blue 249-1282: Phthalocyanin Pigment der Fa. Sun-Chemicals

**Formulierung der Pigmentpaste**

| **15% sop (solid on pigment)** | **Printex 35** | **Sunfast blue 249-1282** | **Irgalith rot FBN** |
|---|---|---|---|
| Wasser | 44,4 | 44,4 | 44,4 |
| Additiv 40%ig | 15,0 | 15,0 | 15,0 |
| Byk-017 | 0,5 | 0,5 | 0,5 |
| Pigment | 40,0 | 40,0 | 40,0 |
| Acticide MBS | 0,1 | 0,1 | 0,1 |
| | **100,0** | **100,0** | **100,0** |

**Die Pigmentpasten werden dann im Verhältnis 30:70 zu dem Bindemittel Johncryl 8052 gegeben.**

### Beurteilung

Als Vergleichsbeispiel (nicht erfindungsgemäß) wurde Beispiel 2 der WO 2008/092687 der Fa. Byk-Chemie herangezogen.

**Printex 35**

| | **1d RT** | | | **7d 50°C** | | |
|---|---|---|---|---|---|---|
| | Viskosität bei 1 1 /s (Pas) | Haze | Gloss (60°) | Viskosität bei 1 1/s (Pa s) | Haze | Gloss (60°) |
| Vergl. Beispiel | 0,94 | 130 | 83 | 2,85 | 194 | 83 |
| Beispiel 1 | 0,18 | 119 | 82 | 0,18 | 180 | 82 |
| Beispiel 2 | 0,26 | 129 | 80 | 0,31 | 130 | 81 |
| Beispiel 3 | 0,17 | 131 | 81 | 0,16 | 95 | 83 |
| Beispiel 4 | 0,14 | 130 | 79 | 0,18 | 158 | 78 |
| Beispiel 5 | 0,22 | 128 | 81 | 0,18 | 119 | 82 |
| Beispiel 6 | 0,20 | 212 | 78 | 0,23 | 189 | 79 |
| Beispiel 7 | 0,18 | 150 | 79 | 0,19 | 236 | 78 |

| | | | | | | |
|---|---|---|---|---|---|---|
| Dispergierung: 60min, 10000 U/min, 40°C, 1:1,5 Perlen 1mm | | | | | | |

**Sunfast blue 249-1282**

| | **1d RT** | | | **7d 50°C** | | |
|---|---|---|---|---|---|---|
| | Viskosität bei 1 1 /s (Pa s) | Haze | Gloss (60°) | Viskosität bei 1 1 /s (Pa s) | Haze | Gloss (60°) |
| Vergl. Beispiel | 5,65 | 422 | 61 | 5,83 | 249 | 66 |
| Beispiel 1 | 0,24 | 205 | 70 | 0,15 | 203 | 71 |
| Beispiel 2 | 0,17 | 204 | 69 | 0,22 | 204 | 69 |
| Beispiel 3 | 0,31 | 192 | 70 | 0,22 | 191 | 69 |
| Beispiel 4 | 0,16 | 225 | 68 | 0,16 | 205 | 70 |
| Beispiel 5 | 0,16 | 231 | 68 | 0,13 | 265 | 68 |
| Beispiel 6 | 0,28 | 225 | 65 | 0,35 | 278 | 62 |
| Beispiel 7 | 0,19 | 460 | 61 | 0,16 | 308 | 67 |

| | | | | | | |
|---|---|---|---|---|---|---|
| Dispergierung: 40min, 10000 U/min, 40°C, 1:1,5 Perlen 1 mm | | | | | | |

**lrgalith rot FBN**

| | **1d RT** | | | **7d 50°C** | | |
|---|---|---|---|---|---|---|
| | Viskosität bei 1 1 /s (Pa s) | Haze | Gloss (60°) | Viskosität bei 1 1/s (Pa s) | Haze | Gloss (60°) |
| Vergl. Beispiel | 35,90 | 377 | 81 | 57,70 | 329 | 82 |
| Beispiel | 3,77 | 555 | 75 | 18,60 | 202 | 85 |
| Beispiel 2 | 0,91 | 358 | 78 | 2,47 | 233 | 80 |
| Beispiel 3 | 1,58 | 319 | 80 | 7,64 | 225 | 80 |
| Beispiel 4 | 1,03 | 246 | 80 | 3,95 | 203 | 77 |
| Beispiel 5 | 1,11 | 240 | 78 | 4,55 | 216 | 76 |
| Beispiel 6 | 1,77 | 329 | 77 | 4,93 | 241 | 78 |
| Beispiel 7 | 1,27 | 293 | 78 | 3,91 | 245 | 78 |

| | | | | | | |
|---|---|---|---|---|---|---|
| Dispergierung: 40min, 10000 U/min, 40°C, 1:1,5 Perlen 1mm | | | | | | |

## Patentansprüche

1. Als Netz- und Dispergiermittel geeignete Additionsverbindung, erhältlich aus der Umsetzung von
A) Polyepoxiden mit
B) mindestens einem primären Polyoxyalkylenamin der allgemeinen Formel (I) 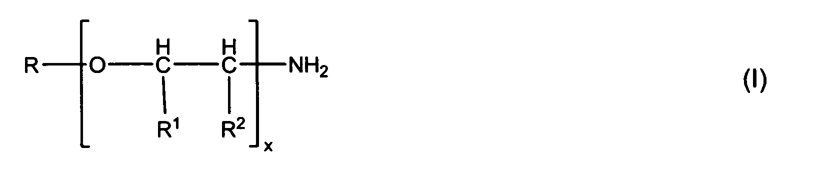 wobei R = C₁-C₂₄-Alkyl, C₅-C₁₂-Cycloalkyl, C₆-C₁₀-Aryl, C₆-C₁₈-Aralkyl, R¹ und R² unabhängig voneinander gleich oder verschieden sein können und H, C₁-C₂₄-Alkyl, Aryl, und/oder -CH₂-O-CₙH₂ₙ₊₁ bedeuten, und x blockweise oder statistisch angeordnet sein kann,
C) mindestens einem weiteren aliphatischen und/oder araliphatischen primären Amin der allgemeinen Formel (11)
H₂N-R⁶-Z (II)
wobei R⁶ = Alkyl, Cycloalkyl, Aryl und Aralkyl und Z eine weitere funktionelle Gruppe ausgewählt aus -OH, tertiärem Amin oder einem heterozyklischen Rest mit einem 5 oder 6-gliedrigen Ring bedeuten,
D) mindestens einem modifizierten Isocyanat der allgemeinen Formel (llla) und/oder (lllb) 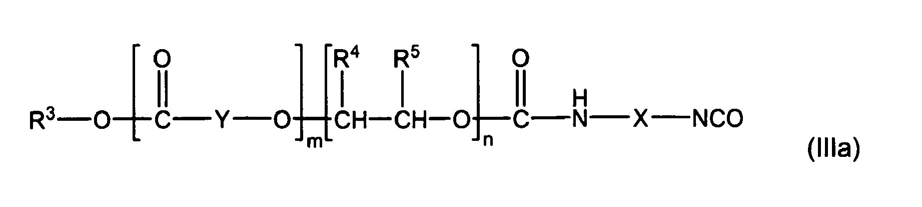 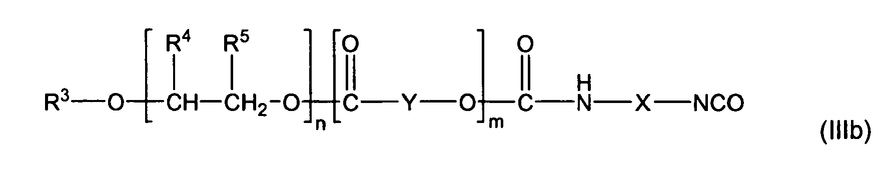 wobei R³ = Alkyl, Cycloalkyl, Aryl und/oder Aralkyl ist, R⁴ und R⁵ unabhängig voneinander H, Alkyl und/oder Aryl sind, X = Alkylen, Cycloalkylen und/oder Aralkylen, Y = Alkylen und/oder Cycloalkylen und n und m unabhängig voneinander gleich 0 bis 100 sind, wobei die Summe n+m ≥ 2 ist,
unter Bildung eines Urethans.

2. Additionsverbindung nach Anspruch 1, **dadurch gekennzeichnet, dass** die
Komponente A Diepoxide der allgemeinen Formel (IV) 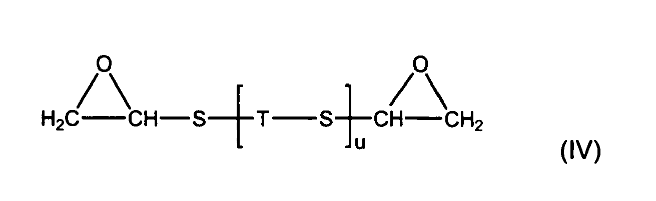 mit S = -CH₂-O- oder -CH₂-, T = Alkylen, Cycloalkylen, Arylen oder Aralkylen und u = 1-8 sind.

3. Additionsverbindung nach einem der vorherigen Ansprüche, **dadurch gekennzeichnet, dass** die Komponente B Methanol-gestartete Polyethylenglykol-Polypropylenglykole mit terminaler primärer Aminogruppe sind, die auf Ethylenoxid und Propylenoxid basieren.

4. Additionsverbindung nach einem der vorherigen Ansprüche, **dadurch gekennzeichnet, dass** in einem weiteren Schritt gegebenenfalls vorhandene terminale Aminogruppen mit Isocyanaten, Lactonen, cyclischen Carbonaten oder (Meth)acrylaten umgesetzt werden.

5. Additionsverbindung nach einem der vorherigen Ansprüche, **dadurch gekennzeichnet, dass** in einem weiteren Schritt gegebenenfalls vorhandene terminale Epoxidgruppen mit sekundären Aminen oder gesättigten oder ungesättigten Carbonsäuren umgesetzt werden.

6. Additionsverbindung nach einem der vorherigen Ansprüche, **dadurch gekennzeichnet, dass** in einem weiteren Schritt gegebenenfalls verbliebene Hydroxylfunktionen mit Hydroxycarbonsäuren und/oder cyclischen Lactonen umgesetzt werden.

7. Additionsverbindung nach einem der vorherigen Ansprüche, **dadurch gekennzeichnet, dass** in einem weiteren Schritt gegebenenfalls verbliebene Hydroxylfunktionen mit ungesättigten cyclischen Anhydriden unter Erhalt der Doppelbindung zur Strahlenhärtung umgesetzt werden.

8. Additionsverbindung nach einem der vorherigen Ansprüche, **dadurch gekennzeichnet, dass** in einem weiteren Schritt gegebenenfalls verbliebene Hydroxylfunktionen mit (Meth)acrylsäure und/oder (Meth)acrylsäureestern unter Erhalt der Doppelbindung zur Strahlenhärtung umgesetzt werden.

9. Additionsverbindung nach einem der vorherigen Ansprüche, **dadurch gekennzeichnet, dass** in einem weiteren Schritt gegebenenfalls verbliebene Hydroxylfunktionen mit anderen als den unter D aufgeführten Isocyanaten umgesetzt werden.

10. Additionsverbindung nach einem der vorherigen Ansprüche, **dadurch gekennzeichnet, dass** in einem weiteren Schritt gegebenenfalls verbliebene Hydroxylfunktionen mit Phosphorsäure oder Polyphosphorsäure und/oder sauren Phosphorsäureestern und/oder Carbonsäuren umgesetzt werden.

11. Additionsverbindung nach einem der vorherigen Ansprüche, **dadurch gekennzeichnet, dass** in einem weiteren Schritt eine Alkylierung oder eine Oxidation der gegebenenfalls verbliebenen Aminogruppen unter Ausbildung von quarternären Ammoniumsalzen oder Stickstoffoxiden erfolgt.

12. Verfahren zur Herstellung einer als Netz- und Dispergiermittel geeigneten Additionsverbindung durch Umsetzung von
A) Polyepoxiden mit
B) mindestens einem primären Polyoxyalkylenamin der allgemeinen Formel (I) 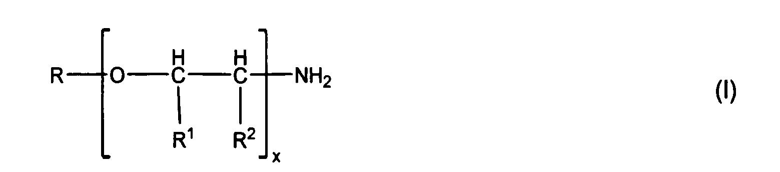 wobei R = C₁-C₂₄-Alkyl, C₅-C₁₂-Cycloalkyl, C₆-C₁₀-Aryl, C₆-C₁₈-Aralkyl, R¹ und R² unabhängig voneinander gleich oder verschieden sein können und H, C₁-C₂₄-Alkyl, Aryl, und/oder -CH₂-O-CₙH₂ₙ₊₁ bedeuten, und x blockweise oder statistisch angeordnet sein kann,
C) mindestens einem weiteren aliphatischen und/oder araliphatischen primären Amin der allgemeinen Formel (11)
H₂N-R⁶-Z (II)
wobei R⁶ = Alkyl, Cycloalkyl, Aryl und Aralkyl und Z eine weitere funktionelle Gruppe ausgewählt aus -OH, tertiärem Amin oder einem heterozyklischen Rest mit einem 5 oder 6-gliedrigen Ring bedeuten,
D) mindestens einem modifizierten Isocyanat der allgemeinen Formel (llla) und/oder (lllb) 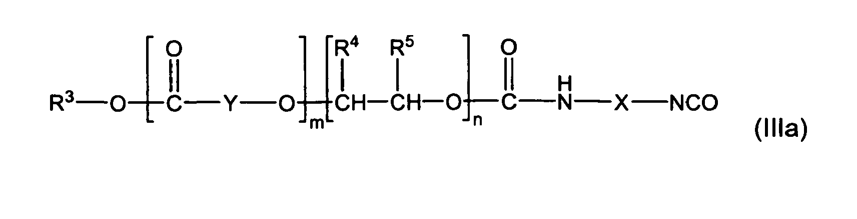 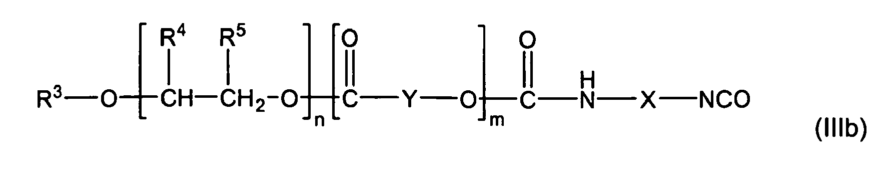 wobei R³ = Alkyl, Cycloalkyl, Aryl und/oder Aralkyl ist, R⁴ und R⁵ unabhängig voneinander H, Alkyl und/oder Aryl sind, X = Alkylen, Cycloalkylen und/oder Aralkylen, Y = Alkylen und/oder Cycloalkylen und n und m unabhängig voneinander gleich 0 bis 100 sind, wobei die Summe n+m ≥ 2 ist,
unter Bildung eines Urethans.

13. Verfahren nach Anspruch 12, **dadurch gekennzeichnet, dass** die Komponente A
Diepoxide der allgemeinen Formel (IV) 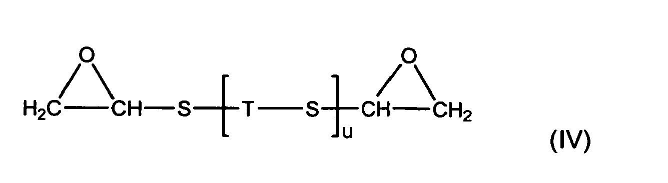 mit S = -CH₂-O- oder -CH₂-, T = Alkylen, Cycloalkylen, Arylen oder Aralkylen und u = 1-8 sind.

14. Verwendung einer Additionsverbindung nach einem der Ansprüche 1 bis 11 als Netz- und/oder Dispergiermittel für organische und/oder anorganische Pigmente oder Füllstoffe.

15. Pulver- oder faserförmige Feststoffe, die mit Additionsverbindungen nach einem der Ansprüche 1 bis 11 beschichtet sind.
